# EUROPEAN PATENT APPLICATION

(11) **EP 4 596 903 A1**
(43) Date of publication of application: **06.08.2025**
(21) Application number: 25154897.0
(22) Date of filing: 30.01.2025
(51) Int. Cl.: F16B 19/02

(54) **FASTENER AND FASTENER OPERATING METHOD**

(30) Priority: 02.02.2024 US 202463549339 P
(71) Applicant: Centrix AeroSpace LLC, Kent, Washington 98032 (US)
(72) Inventor: McClure, Travis, Chelan Falls 98817 (US)
(74) Representative: DTS Patent- und Rechtsanwälte PartmbB

(57) **Abstract**

A fastener assembly 100 with workpiece clamping functionality. The fastener assembly, in one example, includes a collet body 104 with a cantilever leg 128 that extends from a crown 126 and includes a foot 130 that mates with a sleeve opening 145 in a collet body sleeve 106 and the collet body sleeve at least partially circumferentially enclosing the collet body. The fastener assembly further includes a workpiece sleeve 108 configured to, in an assembled configuration, mate with the collet body sleeve and prevent rotation of the collet body sleeve and a stud 102 configured to threadingly engage the collet body sleeve or the collet body.

## Description

### CROSS-REFERENCE TO RELATED APPLICATION

The present application claims priority to U.S. Provisional Application No. 63/549,339, entitled "FASTENER AND FASTENER OPERATING METHOD", and filed on February 2, 2024. The entire contents of the above-listed application are hereby incorporated by reference for all purposes.

### FIELD

The present description relates generally to a fastener with a collet body sleeve and a workpiece sleeve.

### BACKGROUND AND SUMMARY

Many manufacturing fields use fasteners for securing multiple work pieces to one another. Fasteners have been used in industries, such as the aerospace industry, to secure floor panels to underlying floor beams, in some use cases. In other aerospace industry use cases, fasteners have been used to attach wing components, fuselage components, pylons, etc., to increase manufacturing adaptability. Previous fasteners have included a screw that interacts with a collet device to expand clamping components in the collet device. When expanded, the clamping components act as a clamping arm to enable axial clamping of a workpiece stack.

The inventor has recognized several drawbacks with previous fasteners. For instance, the type of fastener with the spindle and the collet body described above may present issues in regard to the fastener's shear resistance and durability. Further, certain previous fasteners have in some cases exhibited issues related to workpiece bore degradation. The inventor has therefore recognized a need to provide a fastener which can achieve greater shear resistance and in some cases lead to less workpiece bore degradation.

Facing the aforementioned challenges, the inventor developed a fastener to at least partially overcome the challenges. The fastener includes, in one example, a collet body with a cantilever leg that extends from a crown and includes a foot which mates with a sleeve opening in a collet body sleeve. In such an example, the collet body sleeve at least partially circumferentially encloses the collet body. The fastener further includes a workpiece sleeve configured to, in an assembled configuration, mate with the collet body sleeve and prevent rotation of the collet body sleeve. The fastener further includes a stud configured to theadingly engage the collet body sleeve or the collet body. In this way, the fastener achieves greater shear resistance capabilities. Therefore, the fastener's durability and longevity is increased and the fastener's applicability is further expanded via enhanced shear resistance. Further, utilizing the workpiece sleeve in the fastener assembly allows the chance of workpiece bore degradation to be reduced, if desired.

In one example, the workpiece sleeve, in a disassembled configuration, may be decoupled from the collet body sleeve. Designing the fastener in this manner allows for an increase in fastener installation adaptability. Consequently, the fastener is able to be used in an even wider range of installation environments, thereby increasing customer appeal.

Further, in one example, the collet body may further include a second cantilever leg that includes a foot configured to mate with another sleeve opening in the collet body sleeve. In such an example, the second cantilever leg may extend from the first crown or a second crown that is separate from the first crown. As a result, the size of the clamping feet may be increased, if desired.

In another example, the foot may have an upper surface that forms an angle with a longitudinal axis that is less than 90° when the fastener is in an clamped configuration. In this way, the angle of the clamping plane is designed to account for expected fastener loading and the resultant foot deflection to allow the upper surface to carry more load during clamping operation by bringing the upper surface closer to a horizontal orientation when clamping forces are fully applied.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

FIG. 1 is a perspective exploded view of a first example of a fastener.
FIG. 2 shows a detailed perspective exploded view of a collet assembly in the fastener, depicted in FIG. 1.
FIG. 3A is an assembled view of the collet assembly, depicted in FIG. 2.
FIG. 3B is a cross-sectional view of the collet assembly, depicted in FIG. 3A.
FIG. 4 is another assembled view of the collet assembly, depicted in FIG. 2.
FIG. 5 is a partially assembled view of the fastener, depicted in FIG. 1.
FIGS. 6A and 6B are an assembled view of the fastener, depicted in FIG. 1.
FIGS. 7 and 8 are different views of the fastener, depicted in FIG. 1, inserted into workpieces.
FIGS. 9 and 10 are different views of the fastener, depicted in FIGS. 7 and 8, in a ready to clamp configuration.
FIGS. 11 and 12 are different views of the fastener, depicted in FIGS. 7 and 8, in a clamping configuration.
FIGS. 13A-16B are views of a clamping sequence for the fastener, depicted in FIG. 1.
FIG. 17 is a cross-sectional view of the first example of the fastener which is clamping workpieces with a different thickness.
FIG. 18 is a cross-sectional view of the first example of the fastener, depicted in FIG. 17, with a lower workpiece omitted from the illustration.
FIGS. 19 and 20 are different views of another example of a collet assembly.
FIG. 21 is yet another example of a collet assembly.
FIG. 22 is another example of a collet assembly.
FIGS. 23A, 23B, and 24 are perspective views of different installation arrangements for different example of workpiece sleeves.
FIGS. 25 and 26 are additional examples of collet assemblies.
FIG. 27 is a method for operation of a fastener.
FIGS. 28-51 show different exemplary fastener variants.
FIGS. 52-53 show different examples of clamping feet for a collet body.

### DETAILED DESCRIPTION

A fastener assembly is described herein that includes a collet body sleeve and a workpiece sleeve. An interface between the workpiece sleeve and the collet body sleeve allows the collet body sleeve and a collet body mated therewith to axial translate to adjust the fastener's grip length while substantially preventing rotation of the collet body sleeve in relation to the workpiece sleeve. The assembly of the collet body sleeve and the collet body and specifically feet in the collet body which mate with openings in the collet body sleeve allows the fastener's shear resistance to be increased. Consequently, the fastener's durability is increased and the fastener's applicability is further expanded. Specifically, in the fastener configuration where the collet body sleeve has threads that interface with a threaded stud, loads are able to be transferred from the collet body to the collet body sleeve. In this way, the load path through the fastener can be directed to the sleeve which is able to carry more load than the collet body legs are capable of. Thus, the fastener is able to carry greater loads. Further, using the workpiece sleeve in the fastener assembly allows the chance of workpiece bore degradation to be reduced. More generally, as indicated above, the other fastener configurations described herein enable the fastener to achieve increased shear resistance, thereby enhancing the fastener's market appeal.

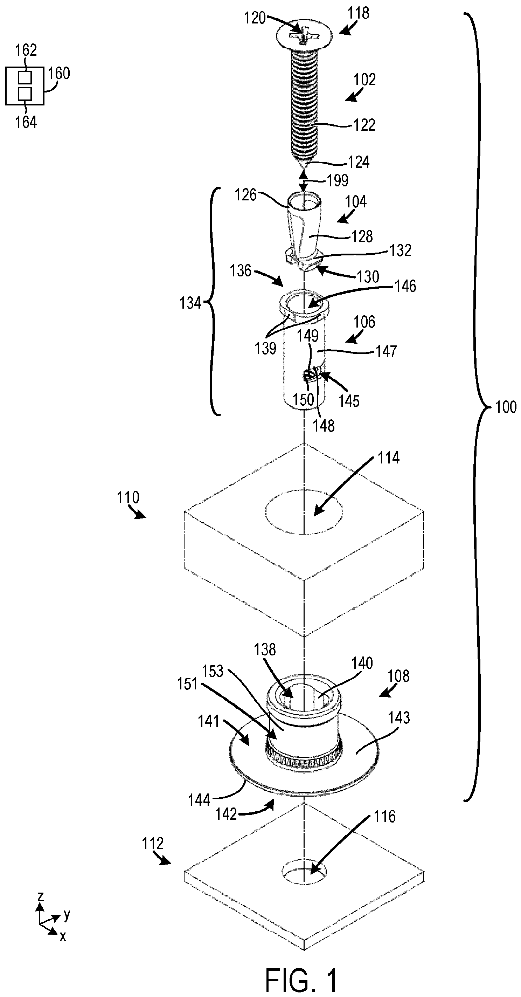

FIG. 1 shows a first example of a fastener 100 in an exploded view. Thus, the fastener is in a disassembled configuration in FIG. 1. The fastener 100 includes a stud 102, a collet body 104, a collet body sleeve 106, and a workpiece sleeve 108. FIG. 1 further illustrates workpieces 110 and 112 with openings 114 and 116, respectively.

The stud 102 includes a head 118 with a drive interface 120 that is configured to interact with a tooling apparatus 160 which induces rotation of the stud in opposing rotational directions to clamp and unclamp the fastener.

More generally, the tooling apparatus 160 (e.g., robotic tooling machine) that may be used to manipulate the fastener 100 (e.g., rotate the stud 102, for instance). The tooling apparatus 160, illustrated in FIG. 1, may include a processor 162 and memory 164 (e.g., non-transitory memory) that stores instructions executable by the processor. The automated tooling apparatus 160 may further include tooling attachments, arms, carriages, and the like, for manipulating the fastener as well as performing other manufacturing operations. The other fasteners described herein may be manipulated using a similar tooling apparatus.

In the illustrated example, the drive interface 120 is in the form of a cross-shaped recess. However, the drive interface 120 of the stud 102 may take a variety of forms in other examples. For instance, the drive interface may be a star-shaped recess, a polygonal recess, an extension (e.g., a polygonal extension, a star-shaped extension, etc.), and the like. Thus, the drive interface may be driven via bits, sockets, combinations thereof, and the like, for instance.

The stud 102 includes a threaded section 122. In the illustrated example, the threaded section 122 extends to a distal tip 124 of the stud 102. To elaborate, the distal tip 124 has a conical shape, in the illustrated example. However, other configurations of the stud have been contemplated, such as a stud with an unthreaded section that is positioned below the threaded section and may extend to a distal end or tip of the stud. In such an example, the unthreaded section may have a smaller diameter than the threaded section. Still in other examples, the stud may include a smaller diameter threaded section positioned below a larger diameter threaded section. Even further in other examples, the distal tip of the stud may have a curved profile (e.g., a domed profile), a planar profile, and the like.

In the illustrated example, the collet body 104 includes a crown 126 and multiple cantilever legs 128 that extend therefrom and each include a foot 130 with a clamping surface 132. Thus, the feet function as clamping feet when the fastener is transitioned into a clamping configuration which is discussed in greater detail herein.

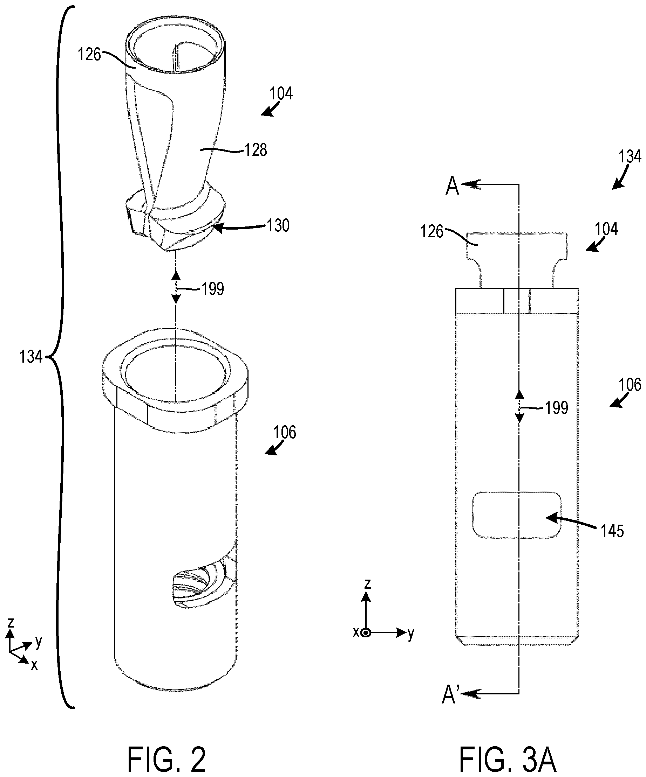

The collet body 104 and the collet body sleeve 106 (as well as the stud 102, in some cases) may form a collet assembly 134 when the fastener is assembled in anticipation of workpiece clamping. However, the workpiece sleeve 108 and the collet assembly 134 may be decoupled from one another during certain steps in the installation process, such as prior to insertion of the workpiece sleeve into the workpiece opening. The collet assembly 134 is described in greater detail herein with regard to FIGS. 2-5.

The collet body sleeve 106 includes a crown 136, in the illustrated example. The crown 136 is designed with anti-rotation functionality when it is mated with a bore 138 in the workpiece sleeve 108. To elaborate, the crown 136 includes one or more planar faces 139 and the bore 138 includes one or more planar faces 140 (e.g., inner planar faces). Specifically, in the illustrated example, the collet body sleeve 106 includes four planar faces with curved sections therebetween and the bore 138 includes similarly profiled features that allow the collet body sleeve crown to mate with the workpiece sleeve opening and axially translated therein while rotation of the collet body sleeve (with regard to the workpiece sleeve) is substantially inhibited. However, crowns with alternate profiles may be used such as planar faces that form polygonal shapes, crowns with a fewer or greater number of planar faces, and the like. Further, in some examples, the collet body sleeve may not include a crown.

The workpiece sleeve 108 may include a flange 141 which may specifically be positioned at a lower side 142 of the sleeve. However, in alternate examples, the workpiece sleeve flange may be positioned at the upper side of the sleeve. The flange 141 specifically includes an upper surface 143 and a lower surface 144. These flange surfaces may be planar and more generally are contoured to interface with the workpieces 110 and 112. The flange 141 may function as an upper clamping arm.

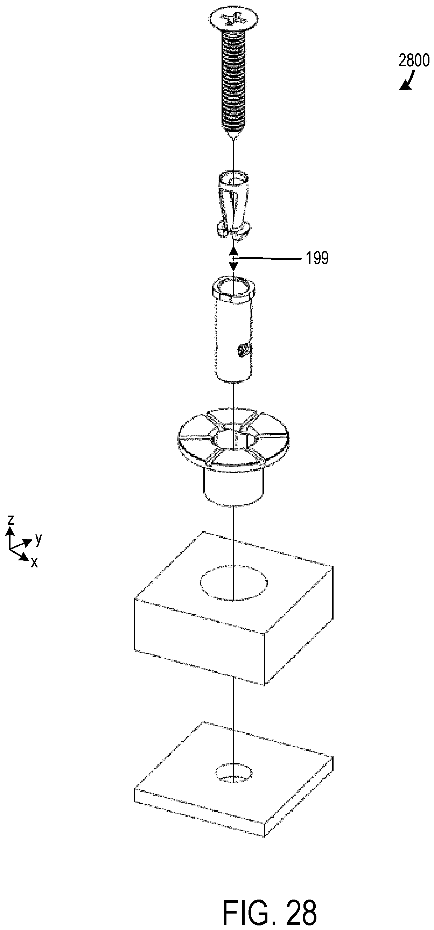

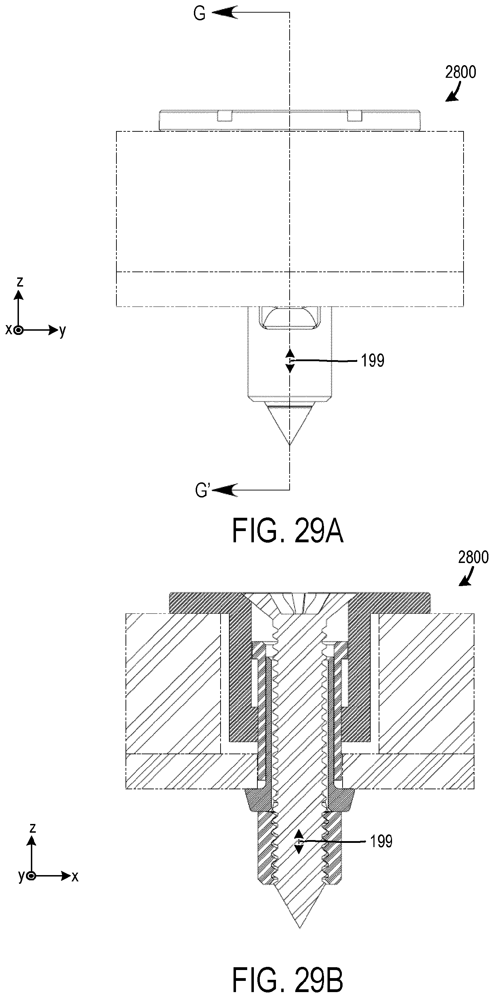

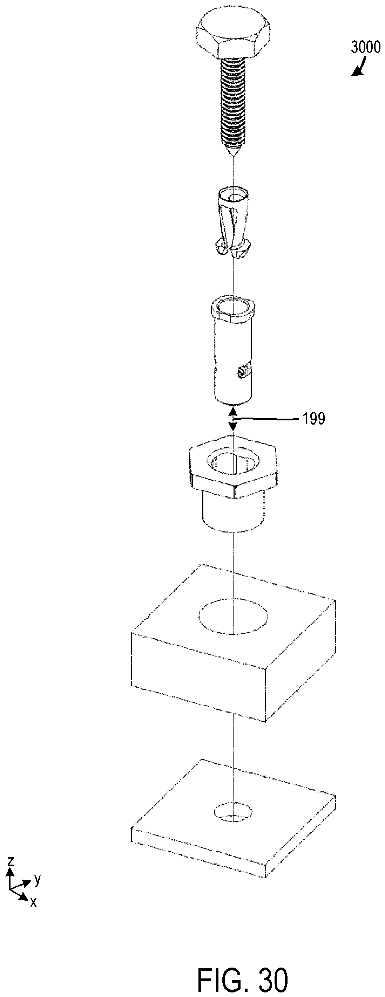

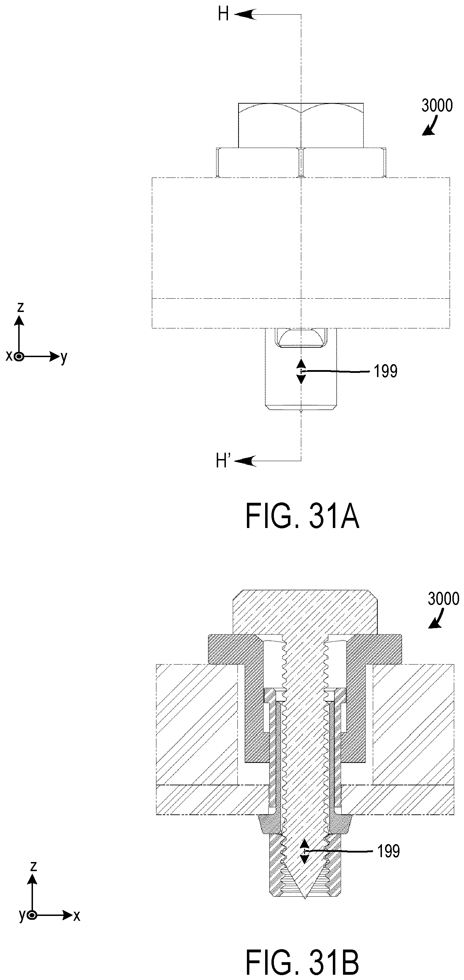

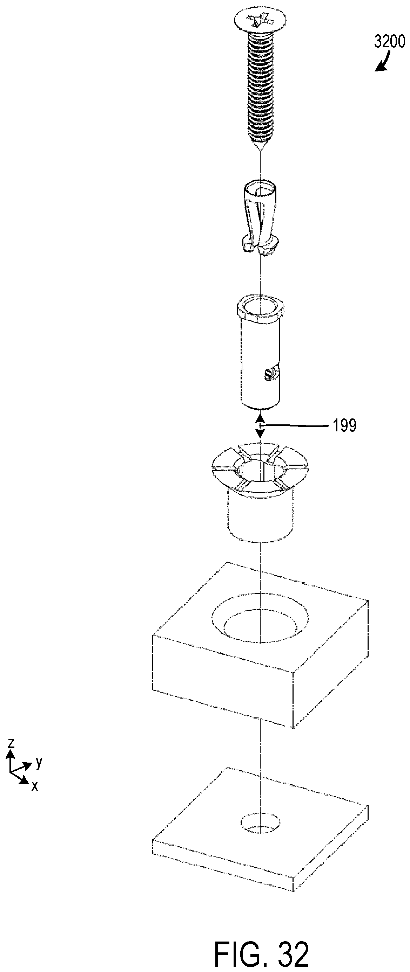

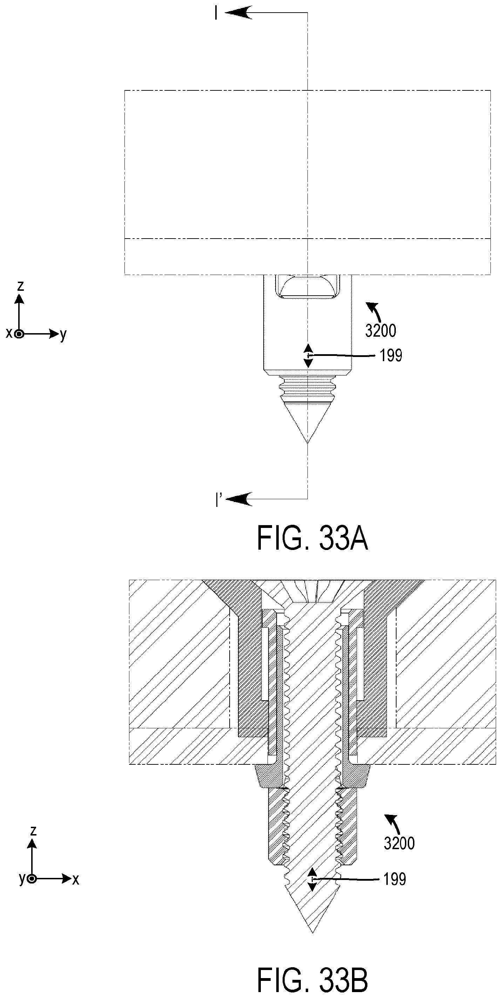

In other examples, the flange may be omitted from the workpiece sleeve. Still further, in other examples, the flange may have other profiles. FIGS. 28-29B, 30-31B, and 32-33B show fasteners 2800, 3000, and 3200, respectively, with workpiece sleeves which have alternate contours. To elaborate, the flange may have a tooling interface which may be in the form of a slots (e.g., wrench flats) as shown in FIGS. 28-29B, a polygonal periphery as shown in FIGS. 30-31B, combinations thereof, and the like. Additionally or alternatively, the workpiece sleeve flange may be designed as a countersink flange as shown in FIGS. 32-33B. Generally, any of the fasteners described herein may include tooling features on any top surface (surface that is exposed to the proximal side) in order to react the torque being applied to the screw (and then through the collet body sleeve, then into the workpiece sleeve, then into the tooling features, and then the tool). Further, in certain example, bonding agents may be used to attach the workpiece sleeve to a workpiece. Still further, in certain example, the fastener may be designed with a removable or non-removable workpiece sleeve. When the workpiece sleeve is removable, a bonding agent may not be used to attach the workpiece sleeve to the workpiece and the sleeve may include a flange on a top side and/or tooling features. Further, in fastener configurations where the flange in on the top side of the workpiece sleeve, the flange may protrude from the proximal surface of the workpiece (i.e., the object which is clamped), as shown in the fasteners 2800 and 3000 depicted in FIGS. 28-29B and 30-31B. Further, the flange may be positioned on a top side or a lower side of the workpiece sleeve, in different embodiments.

Continuing with FIG. 1, the workpiece sleeve 108 further includes a body 151 with an outer surface 153. The collet body sleeve 106 includes openings 145 (e.g., sleeve openings) that are configured to mate with the feet 130 in the collet body 104, discussed in greater detail herein. The openings 145 extend radially outward from an interior bore 146 and through a wall 147 of the collet body sleeve 106. Additionally, the openings 145 may include an upper side 148, a lower side 149, and lateral sides 150. The sides of the openings constrain (e.g., substantially inhibit) rotational movement about axis 199, when the collet body 104 is mated with the collet body sleeve 106. Additionally, the openings 145 are equally spaced around the collet body sleeve (with regard to the central axis 199), in the illustrated example. However, unequal spacing of the openings has been contemplated. Additionally, the fastener 100 includes a corresponding number of openings 145 in the collet body sleeve 106 and feet 130 in the collet body 104, in the illustrated example. However, the fastener 100 may include a mismatched number of feet and openings, in other examples. Furthermore, the fastener 100 includes two openings and two feet, in the illustrated embodiment. However, alternate numbers of feet and/or openings have been envisioned.

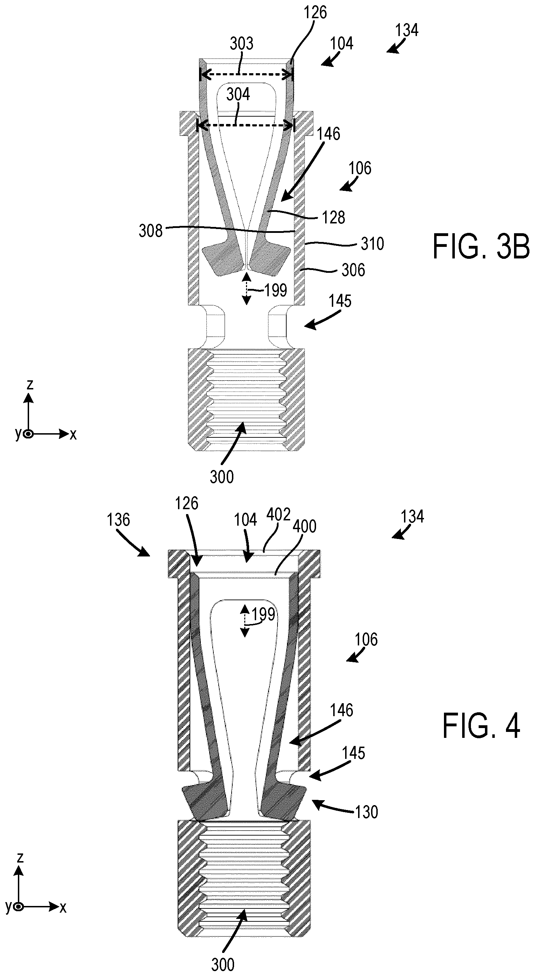

The stud 102 includes the threaded section 122 that is profiled to threadingly engage a threaded section 300 (shown in FIG. 3B) of the collet body sleeve 106 in the illustrated example. The collet body crown 126 is not threaded, in the illustrated example. However, in other examples, the stud may be contoured to threadingly engage a threaded section of the collet body which may be located at an interior of the crown. The threaded section 300 (shown in FIG. 3B) of the collet body sleeve 106 is positioned below the sleeve openings 145 in the illustrated example. However, in other examples, the threaded section of the collet body sleeve may be positioned above the openings.

FIG. 1 further shows a tooling apparatus 160 (e.g., robotic tooling machine which may be automated) that may be used to manipulate the fastener 100 (e.g., rotate the drive head 116, for instance). The tooling apparatus 160, illustrated in FIG. 1, may include a processor 162 and memory 164 (e.g., non-transitory memory) storing instructions executable by the processor. The tooling apparatus 160 may further include tooling attachments, arms, carriages, and the like, for manipulating the fastener as well as performing other manufacturing operations. The other fasteners described herein may be manipulated using a similar tooling apparatus.

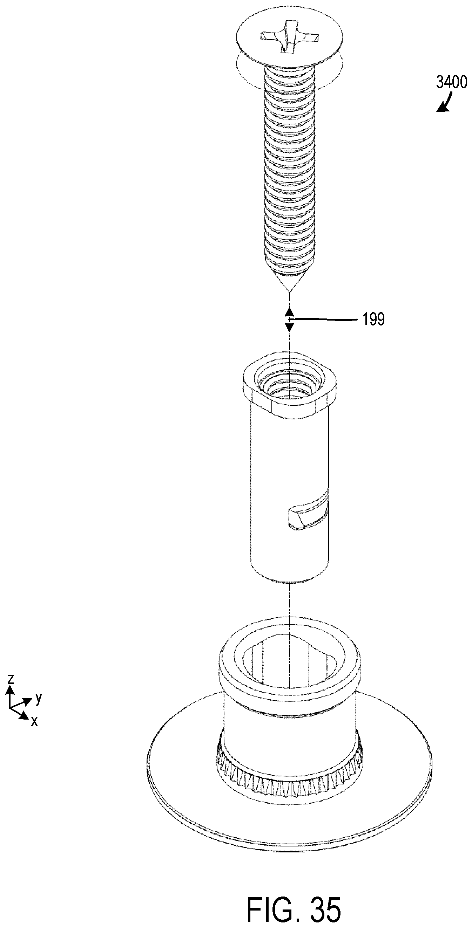

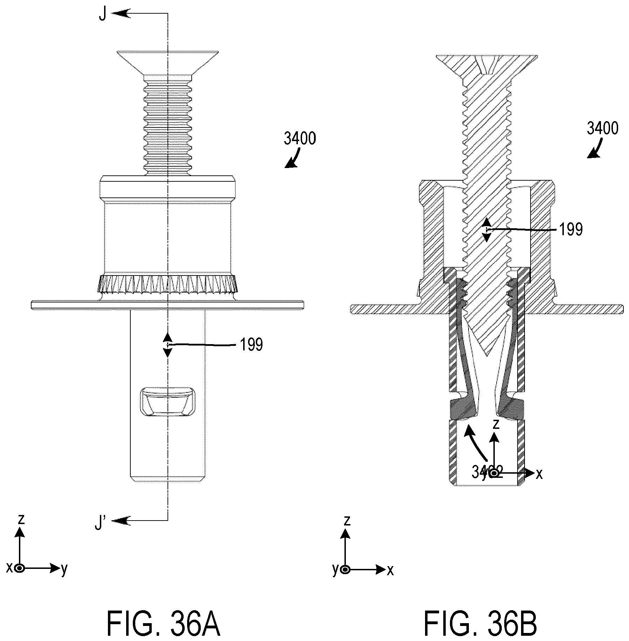

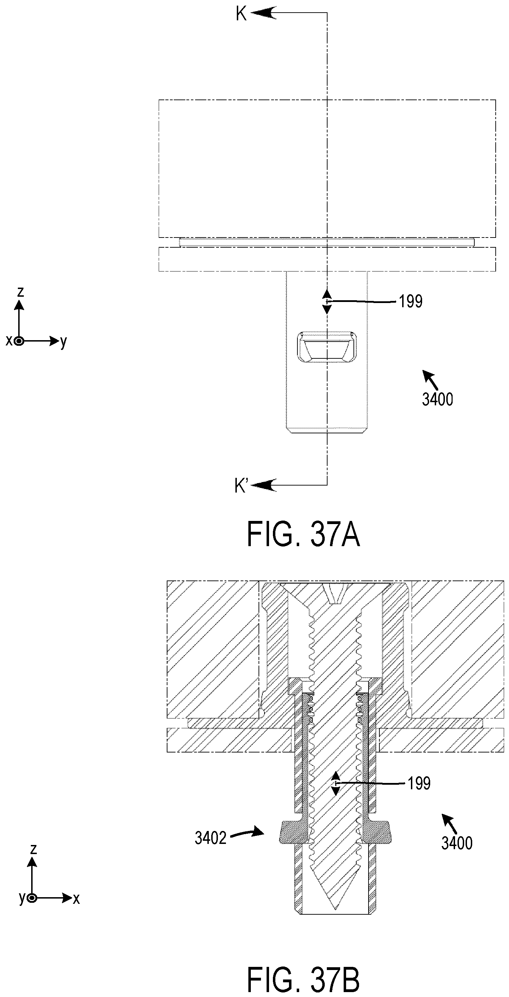

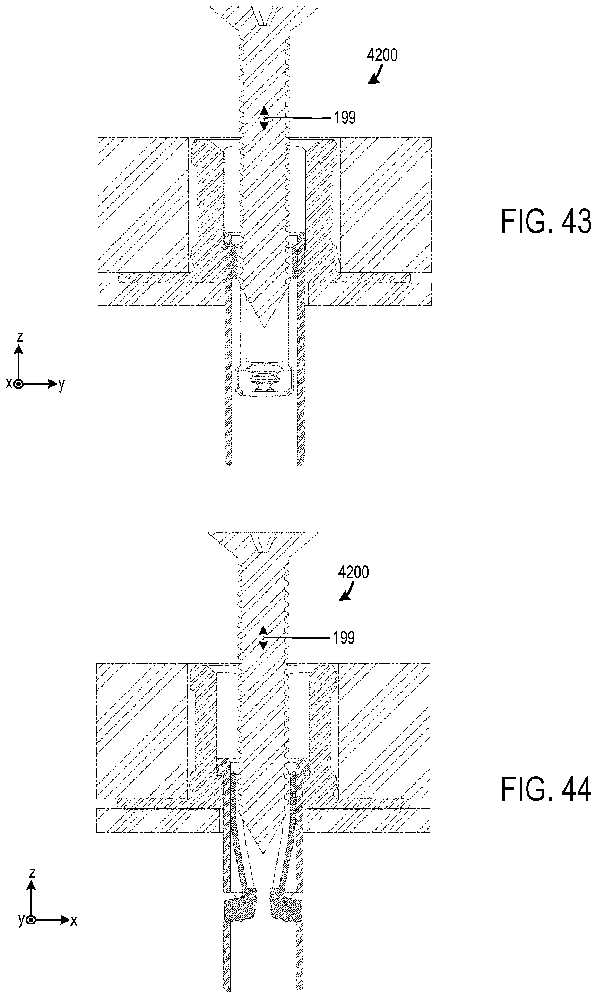

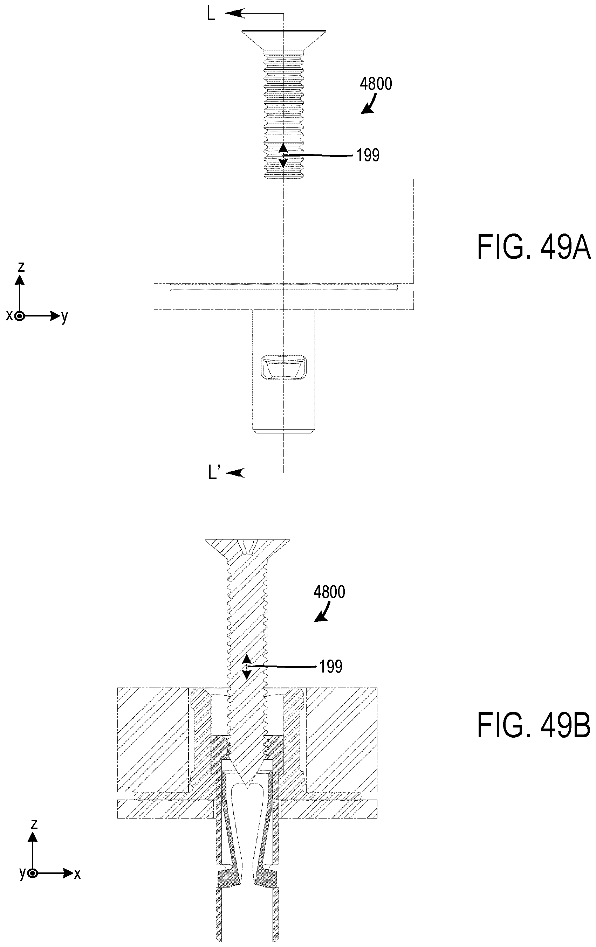

An axis system is provided in FIG. 1 as well as FIGS. 2-26 and 28-53, for reference. The z-axis may be a vertical axis (e.g., parallel to a gravitational axis), the x-axis may be a lateral axis (e.g., horizontal axis), and/or the y-axis may be a longitudinal axis, in one example. However, the axes may have other orientations, in other examples. Further, a central axis 199 of the fastener 100 depicted in FIG. 1 as well as the fasteners depicted in FIGS. 2-26 and 28-51, for reference. Further, above and below as discussed herein may refer to relative proximal and distal positions in the fastener. However, it will be appreciated that the fastener's central axis may or may not be aligned with a gravitational axis in different installation orientations.

FIG. 2 shows an exploded view of the collet body 104 and the collet body sleeve 106 which conceptually form the collet assembly 134 when assembled (as shown in FIG. 3A). It will be understood that the collet body 104 may be inserted into the collet body sleeve 106 when the fastener is assembled.

Further, the crown 126 of the collet body 104 depicted in FIG. 2 has multiple cantilever legs 128 that extend therefrom and each include foot 130. However, in alternate examples, the collet body may be formed as an assembly with multiple separate pieces which may each include a crown and a leg. In such an example, the crown sections may contact one another when assembled.

The collet body legs 128 bend inwardly in a neutral configuration, in the illustrated example. However, the collet body legs may have an alternate contour in their neutral configurations, in alternate examples.

FIG. 3A shows an assembled view of the collet body 104 and the collet body sleeve 106 which forms the collet assembly 134. As shown in FIG. 3A, the crown 126 of the collet body 104 has not yet been mated with the collet body sleeve 106 and the feet of the collet body 104 are note mated with the sleeve openings. Cutting plane A-A' denotes the cross-sectional view provided in FIG. 3B.

FIG. 3B shows the collet body 104 partially inserted into the collet body sleeve 106 to form the collet assembly 134. As shown, the outer diameter 303 of the crown 126 is less than an inner diameter 304 of the collet body sleeve 106. Further, the legs 128 are shown positioned within the interior bore 146 of the collet body sleeve 106. To elaborate, FIG. 3B shows the fastener in a state where the legs 128 are compressing inwards to facilitate workpiece installation. Next, as shown in FIG. 4, Then, as illustrated in FIG. 4, the legs 128 spring open (to their neutral position) once the legs are aligned and slightly protrude into the openings (e.g., windows) in the collet body sleeve 106. When the legs 128 are in their neutral positon, as shown in FIG. 4, the outer diameter of the clamping feet 130 is still slightly less than the outer diameter of the collet body sleeve 106 yet the clamping feet are still residing within the windows of the collet body sleeve. Therefore, the collet body is held in position within the collet body sleeve, in this configuration. The clamping feet may be designed with alternate functionality, in other embodiments.

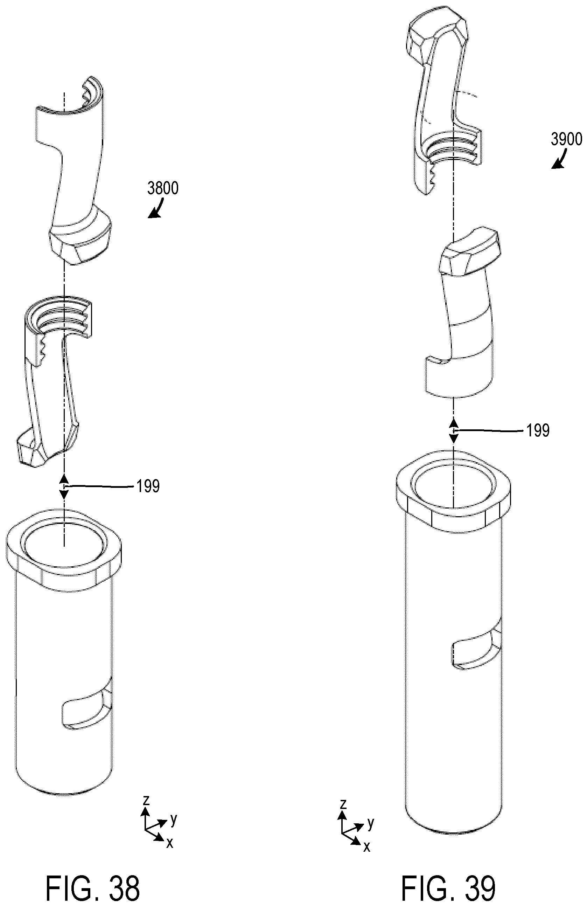

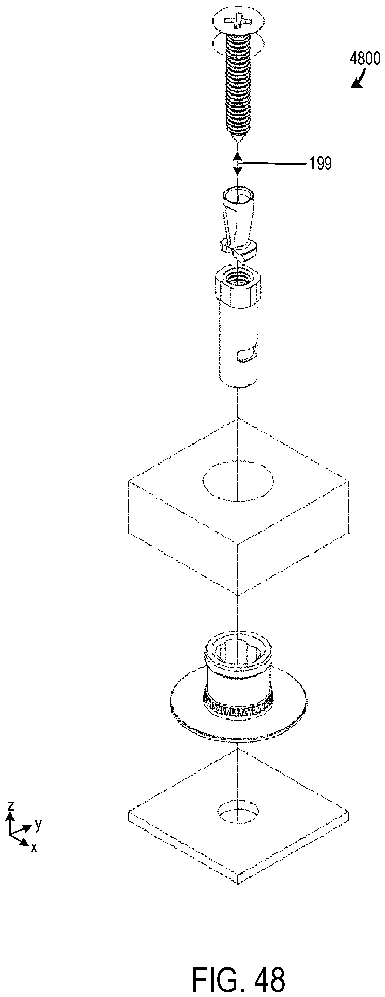

The threaded section 300 (e.g., interior threaded section) of the collet body sleeve 106 is depicted in FIG. 3B. The threaded section 300 is positioned below the sleeve openings 145 in the illustrated example. However, other configurations of the collet body are possible. For instance, fastener configurations where the crown is positioned below the feet and the threaded interior section of the collet body sleeve is positioned above the sleeve openings are possible. FIGS. 39-40 show collet assemblies 3900 and 4000, respectively, where the collet body feet are positioned above the collet body crown. FIGS. 48-49B show a fastener 4800 where the collet body sleeve includes a threaded section above the sleeve openings. Further, as shown in FIG. 3B, the collet body sleeve openings 145 extend through a wall 306 of the collet body sleeve 106 from an inner surface 308 to an outer surface 310.

FIG. 4 shows the collet body 104 further inserted into the collet body sleeve 106 in the collet assembly 134 such that the feet 130 mate with the collet body sleeve openings 145. The cutting plane for the cross-sectional view of FIG. 4 is in the same location as the cutting plane A-A' depicted in FIG. 3A. The feet 130 in the sleeve openings 145 are positioned vertically above the threaded section 300 of the collet body sleeve 106. The crown 136 of the collet body sleeve 106 is again depicted and the collet body crown 126 is shown positioned in the interior bore 146 of the collet body sleeve. The crown 126 and the crown 136 may each include a chamfered surface 400 and 402.

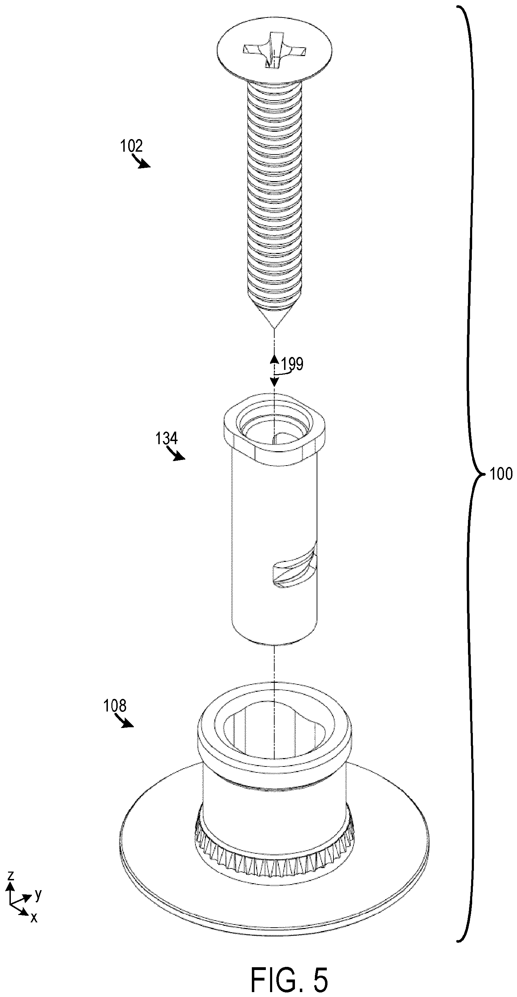

FIG. 5 shows the fastener 100 in a partially exploded view where the collet assembly 134 is at least partially assembled. The stud 102 and the workpiece sleeve 108 are again depicted.

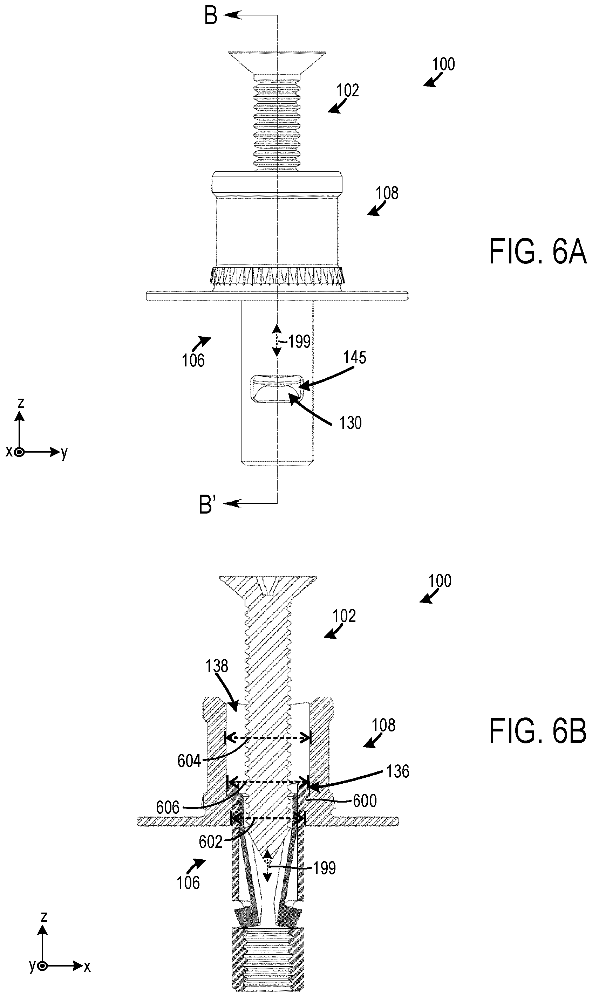

FIG. 6A shows an assembled view of the fastener 100 with the collet body sleeve 106 mated with the workpiece sleeve 108 and the stud 102 which is mated with the collet body sleeve 106 and the collet body 104. The feet 130 of the collet body are shown mated with the openings 145. Cutting plane B-B' denotes the cross-sectional view provided in FIG. 6B.

FIG. 6B shows a cross-sectional view of the fastener 100 in an assembled configuration, prior to the stud 102 being threaded into the collet body sleeve 106. As illustrated in FIG. 6B, the crown 136 of the collet body sleeve 106 is mated with a central bore 138 of the workpiece sleeve 108. Further, the crown 136 of the collet body sleeve 106 is in contact with a lip 600 (e.g., a lower lip) in the bore 138. In this way, the collet body sleeve is axially delimited on a lower side of the workpiece sleeve to avoid the collet body sleeve falling out of the lower side of the workpiece sleeve. An inner diameter 602 of the lip 600 is therefore smaller than an inner diameter 604 of the upper section of the bore 138 and an outer diameter 606 of the crown 136.

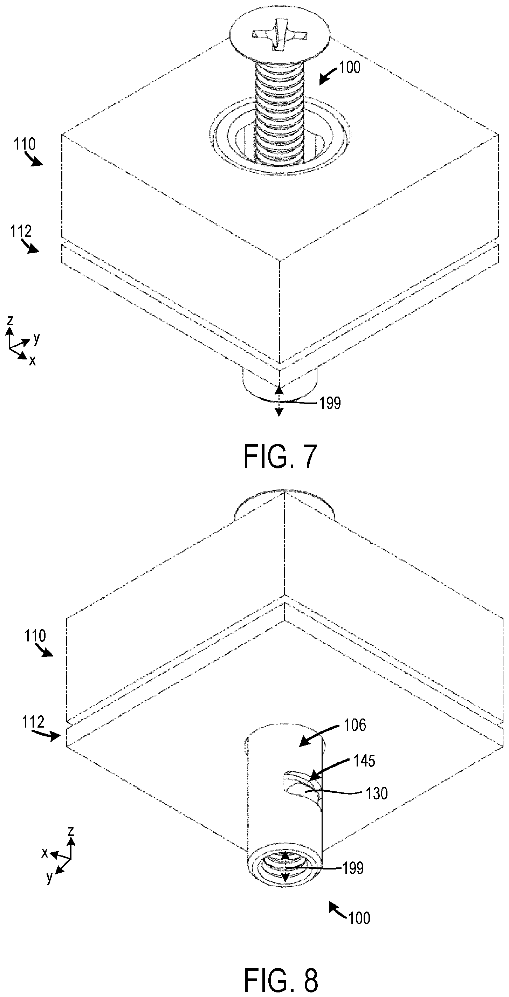

FIGS. 7 and 8 show the fastener 100 inserted into the workpieces 110, 112 in an assembled (e.g., ready to clamp) configuration where the feet 130 are in their inward position that does not protrude beyond the openings 145 of the collet body sleeve 106.

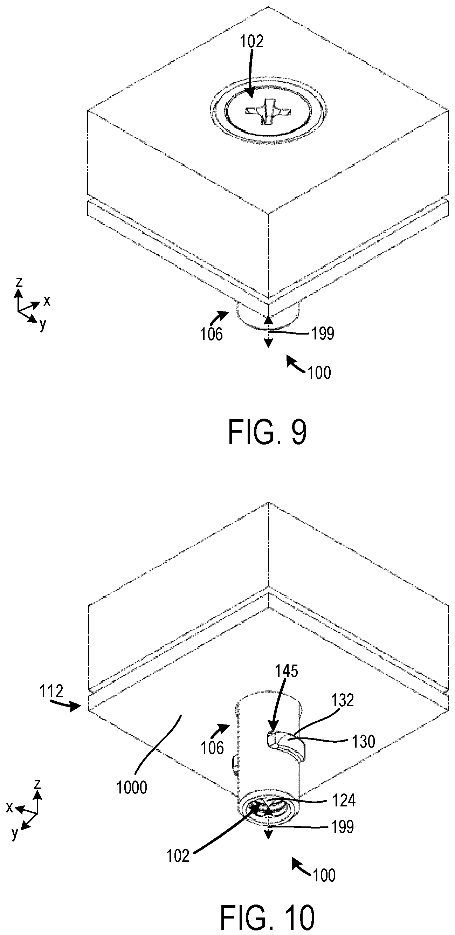

FIGS. 9 and 10 show the fastener 100 with the stud 102 threaded into the collet body sleeve 106 and urging the feet 130 outward through the openings 145. Clamping surfaces 132 of the feet 130 are spaced away from a surface 1000 of the lower workpiece 112. As shown, the distal tip 124 of the stud 102 does not protrude beyond a distal end of the collet body sleeve 106. However, as the stud 102 is further threaded into the collet body sleeve 106, the end of the stud moves down with regard to the sleeve.

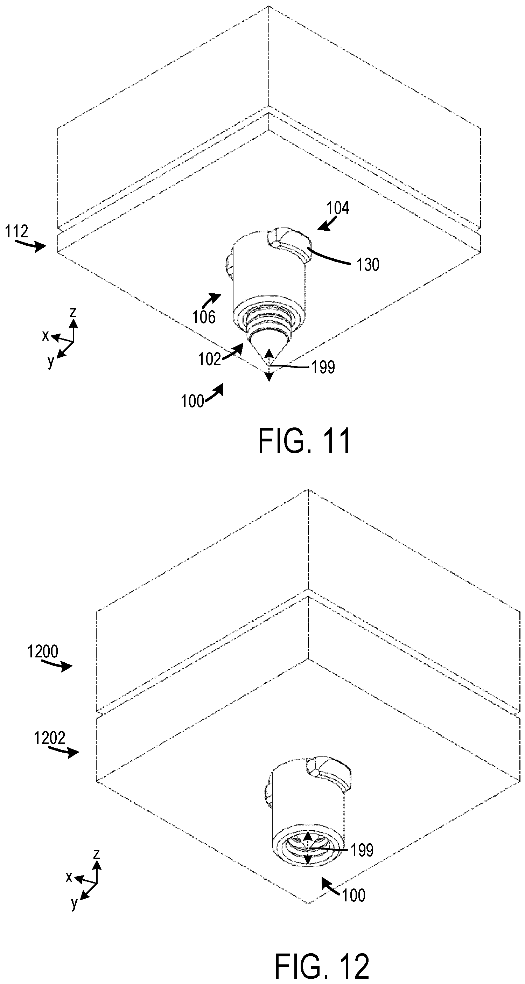

FIG. 11 shows the fastener 100 with the stud 102 further threaded into the collet body sleeve 106 which draws the clamping feet 130 into contact with the lower workpiece 112. To elaborate, threading the stud 102 causes the assembly which is formed from the collet body 104 and the collet body sleeve 106 to axially translate upwards with regard to the workpiece sleeve. The clamping feet therefore function as a clamping arm. The workpiece sleeve may function as the other clamping arm.

FIG. 12 shows the fastener 100 clamping workpieces 1200, 1202 of different sizes than the workpieces shown in FIG. 11. The fastener has a comparatively high grip length allowing the fastener to clamp workpieces with a variety of thickness. Consequently, the fastener has applicability in a wide variety of installation environments.

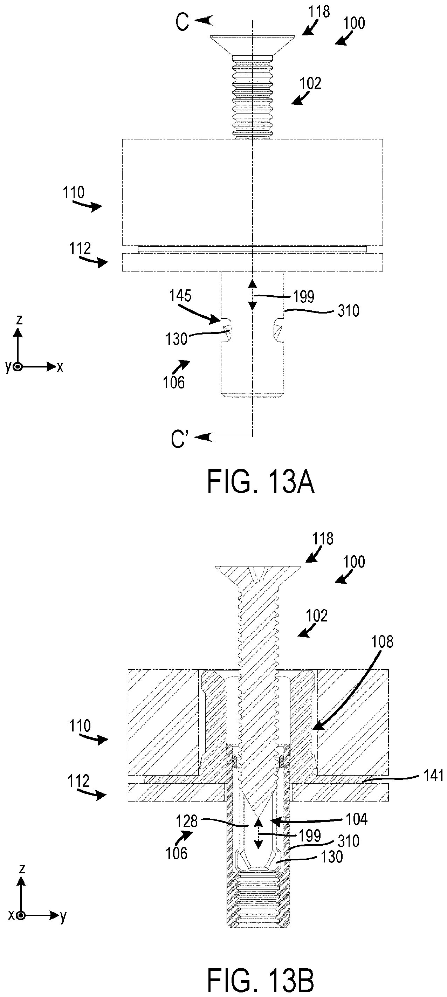

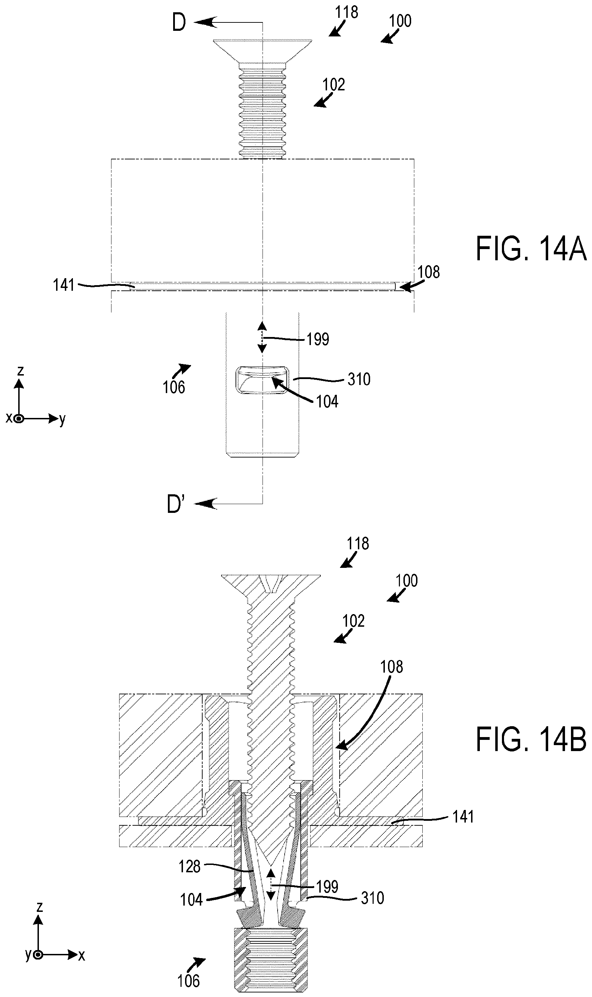

FIGS. 13A-16B show a clamping sequence of the fastener 100. Cutting plane C-C' denotes the cross-sectional view provided in FIG. 13B and cutting plane D-D' denotes the cross-sectional view provided in FIG. 14B.

FIGS. 13A, 13B, 14A, and 14B show the fastener 100 in assembled configuration (e.g., a ready to be clamped configuration) where the feet 130 are mated with the openings 145 but not protruding beyond an outer surface 310 of the collet body sleeve 106. As shown, the stud 102 is unthreaded into the collet body sleeve 106 and the stud is not pushing the legs 128 of the collet body 104 radially outward. The flange 141 of the workpiece sleeve 108 is also shown positioned axially between the workpieces 110, 112. As shown, the head 118 of the stud 102 is spaced away from the workpiece sleeve 108.

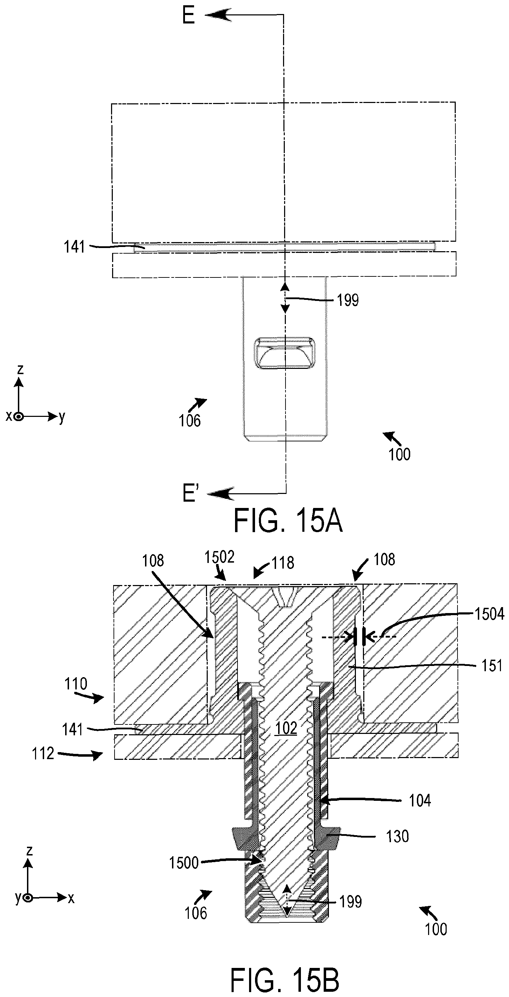

FIGS. 15A and 15B show the fastener 100 in a ready to clamp configuration where the stud 102 has been pushed downward and is threaded into the collet body sleeve 106 which forms a threaded interface 1500. The feet 130 of the collet body 104 have been pushed radially outward in a clamping position. Cutting plane E-E' denotes the cross-sectional view provided in FIG. 15B. As shown in FIG. 15B, the head 118 of the stud 102 is mated with an upper workpiece sleeve opening 1502. A gap 1504 may be formed between at least a portion of the body 151 of the workpiece sleeve 108 and the upper workpiece 110. The flange 141 is shown positioned between the workpieces 110, 112 and in contact therewith.

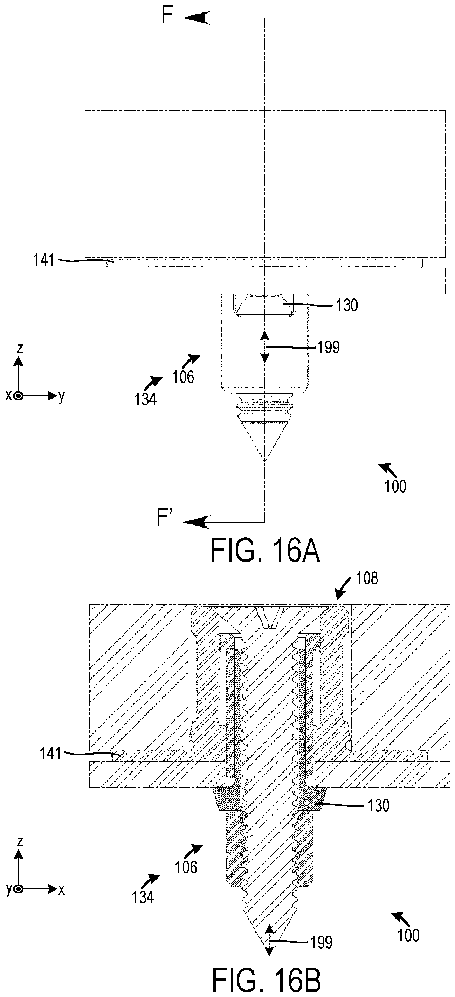

FIGS. 16A and 16B show the fastener 100 in a clamping configuration where the stud 102 has been further threaded into the collet body sleeve 106 such that the collet assembly 134 is axially translated upward to bring the feet 130 into contact with the lower workpiece 112. As shown, the flange 141 of the workpiece sleeve 108 functions as an upper clamping arm and the feet 130 function as a lower clamping arm. However, other fastener configurations are possible. Cutting plane F-F' denotes the cross-sectional view provided in FIG. 16B.

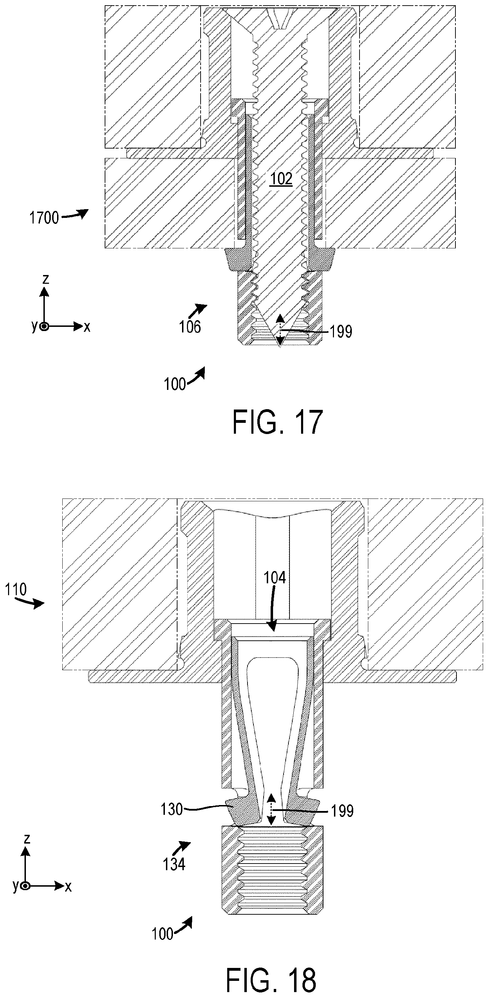

FIG. 17 shows the fastener 100 clamping a thicker workpiece 1700. The stud 102 therefore has been rotated in a direction that unthreads the stud from the collet body sleeve 106 to accommodate for the thicker workpiece.

FIG. 18 shows the fastener 100 with the stud removed and the lower workpiece omitted from the assembly. To elaborate, the fastener shown in FIG. 18 is in an assembled configuration where the collet assembly 134 is inserted into the upper workpiece 110. The feet 130 of the collet body 104 are in their neutral position in FIG. 18.

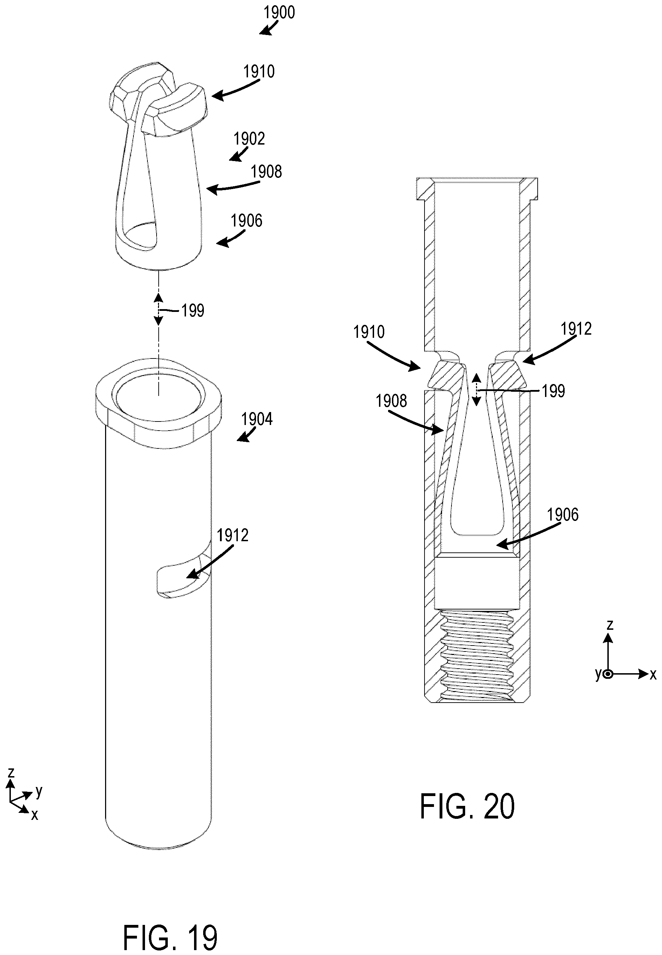

FIGS. 19 and 20 show another example of a collet assembly 1900 with a collet body 1902 and a collet body sleeve 1904. The collet body 1902 has a crown 1906 positioned below legs 1908 and feet 1910 when assembled. To elaborate, the crown 1906 is positioned below opening 1912 in the collet body sleeve 1904 when the collet assembly 1900 is assembled. In this way, the foot openings in the collet body sleeve may be positioned in a higher vertical position, if wanted.

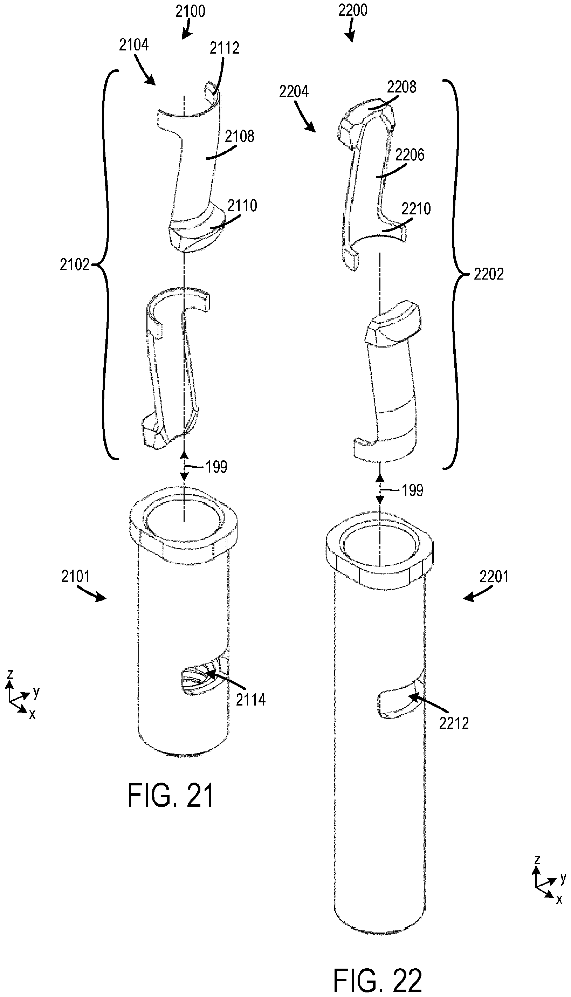

FIG. 21 shows another example of a collet assembly 2100 with a collet body sleeve 2101 and a collet body 2102 that has separate leg and crown sections 2104. To expound, the collet body 2102 includes distinct leg and crown sections 2104 which include a leg 2108, a foot 2110, and a crown portion 2112. Designing the collet assembly in this manner allows the feet to be increased in size, if so desired. Consequently, the strength the collet assembly is increased. In FIG. 21, the openings 2114 in the collet body sleeve 2101 are positioned below the crown portions 2112 when the collet assembly is assembled.

FIG. 22 shows yet another example of a collet assembly 2200 with a collet body sleeve 2201 and a collet body 2202 that has separate sections 2204 that each include a leg 2206, a foot 2208, and a crown portion 2210. Again, the size of the feet may be increased if so desired when the legs and feet are formed in separate sections. In FIG. 22, the openings 2212 in the collet body sleeve 2201 are positioned above the crown portions 2210 when the collet assembly is assembled.

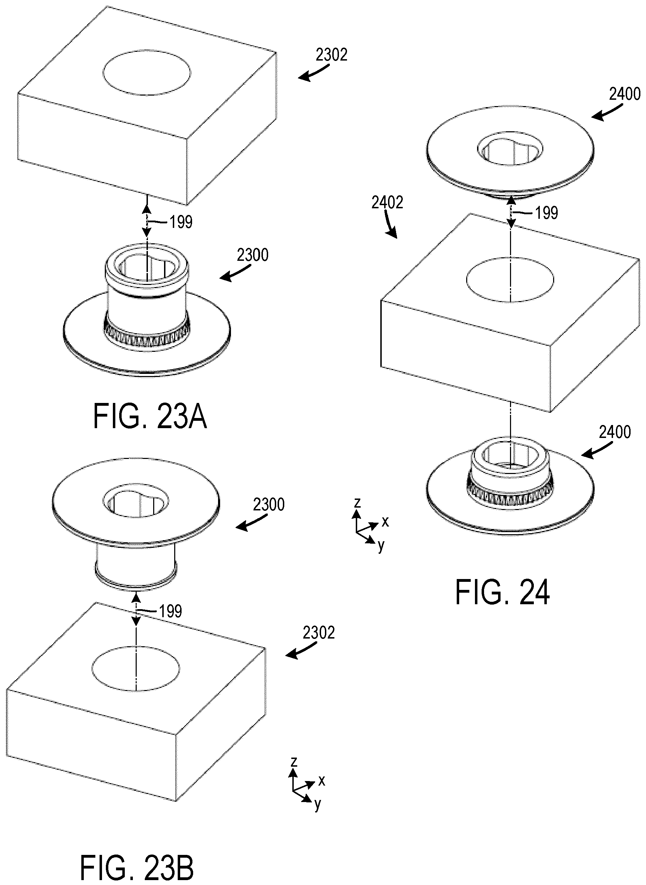

FIGS. 23A and 23B show a different potential arrangement for a workpiece sleeve 2300 in a workpiece 2302. In this way, the workpiece sleeve may be inserted into the workpiece from above or below.

FIG. 24 shows another example where multiple workpiece sleeves 2400 are inserted into a single workpiece 2402. In this way, the workpiece sleeves are inserted from above and below.

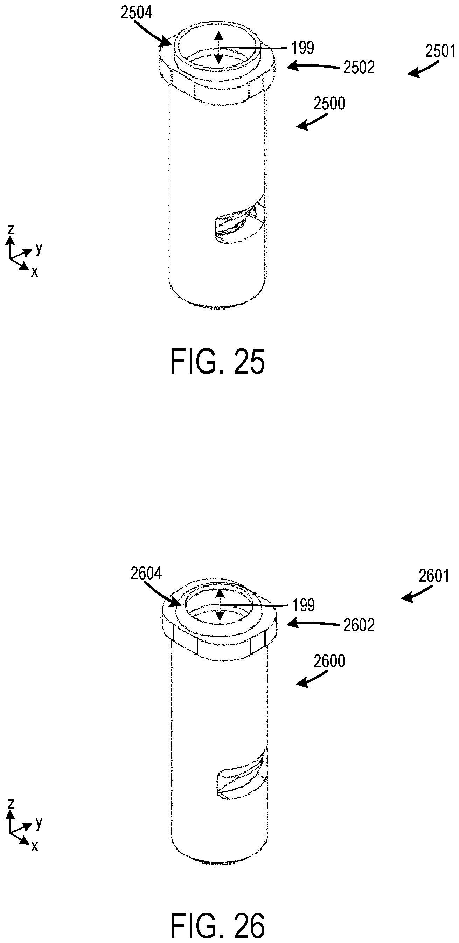

FIG. 25 shows another example of a collet body sleeve 2500 in a collet assembly 2501. The collet body sleeve 2500 includes a crown 2502 and an extension 2504 above the crown. The extension 2504 may be swaged (e.g., bent over) after insertion of the collet body. In this way, it is difficult (e.g., not possible) to remove the collet body after it is inserted in the collet body sleeve, in such an example. The collet body sleeve extension therefore may be used to keep the collet body within the collet body sleeve and thus decreasing foreign object debris. Further, this swaged feature of the collet body sleeve can allow for follow on steps. To expound, in one use-case scenario, assembling the fastener with this swaged feature (in a factory or as part of a build process that involves multiple steps of adding structure to be clamped and various components of the assembly) is simplified, especially if the collet is designed with split legs. FIG. 26 shows another example of a collet body sleeve 2600 in a collet assembly 2601. The collet body sleeve 2600 includes a crown 2602 and an angled extension 2604 above the crown. The collet body sleeve extensions increase the structural integrity of the sleeve.

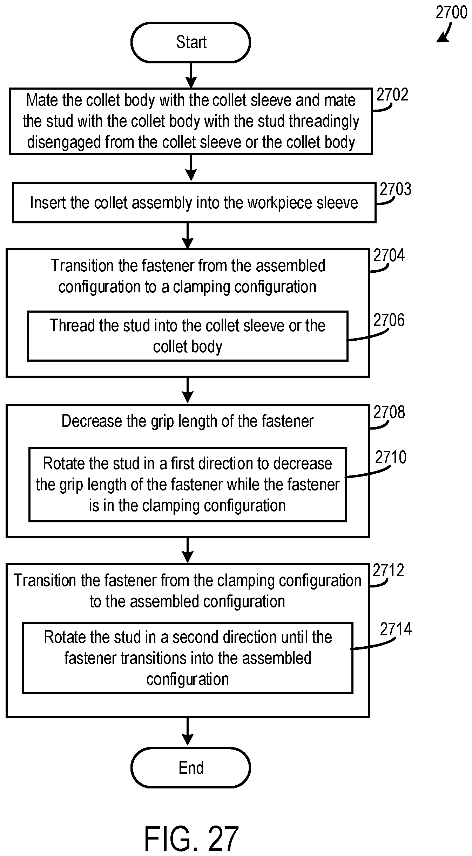

FIG. 27 shows a method 2700 for operating a fastener. The method may be implemented by any of the fasteners and tooling apparatuses or combinations of the fasteners and tooling apparatuses described above with regard to FIGS. 1-26. However, in other examples, the method may be implemented by other suitable fastener systems and/or tooling apparatuses. Still further, at least a portion of the method steps may be manually implemented via manufacturing personnel, in some instances.

At 2702, the method includes mating the collet body with the collet body sleeve and mating the stud with the collet body with the stud threadingly disengaged from the collet body sleeve or the collet body. In this way, the fastener's components are assembled in anticipation of workpiece insertion.

At 2703, the method includes inserting the collet assembly into the workpiece sleeve. It will be appreciated that the workpiece sleeve may be inserted into a workpiece prior to step 2703 or step 2702.

At 2704, the method includes transitioning the fastener from the assembled configuration to a clamping configuration. This fastener transition specifically includes at step 2706 threading the stud into the collet body sleeve or the collet body to urge the collet legs outward such that the feet extend radially beyond the openings in the collet body sleeve.

At 2708, the method includes decreasing the grip length of the fastener. Decreasing the grip length of the fastener includes at 2710, rotating the stud in a first direction to decrease the grip length of the fastener while the fastener is in the clamping configuration. To elaborate, the collet body sleeve and the collet body are drawn upwards as the stud is rotated in the first direction. In this way, the fastener may be adjusted such that it axially clamps the workpieces.

At 2712, the method includes transitioning the fastener from the clamping configuration to the assembled configuration for removal of the fastener from the workpieces. Transitioning the fastener from the clamping configuration to the assembled includes at 2714, rotating the stud in a second direction until the fastener transitions into the assembled configuration where the clamping feet are radially retracted. Subsequent to step 2714, the method may include removing the fastener from the workpieces. Method 2700 allows the fastener to be efficiently transitioned between the fastener's different configurations for effective installation, clamping, and removal of the fastener from the workpieces. As a result, the fastener may be effectively installed in a variety of operating environments, thereby expanding the fastener's applicability. The technical effect of the fastener operating methods described herein is to allow the fastener to carry higher loads when clamping.

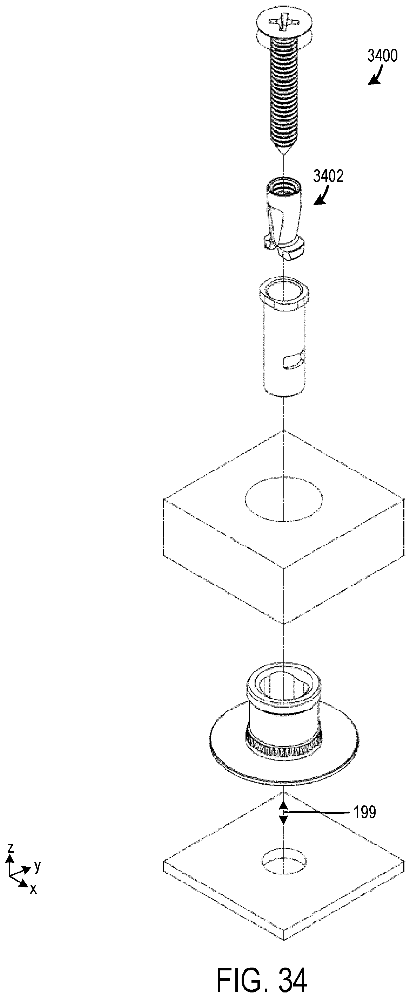

FIGS. 34-37B show a fastener 3400 where the collet body 3402 includes threads in the crown. It will be understood, that the threaded collet body variant may be used in any of the fasteners described herein.

FIG. 38 shows a collet assembly 3800 with a split leg design. In this split leg design, the clamping feet are positioned below the crown. Conversely, as shown in FIG. 39 the clamping feet may be positioned above the crown.

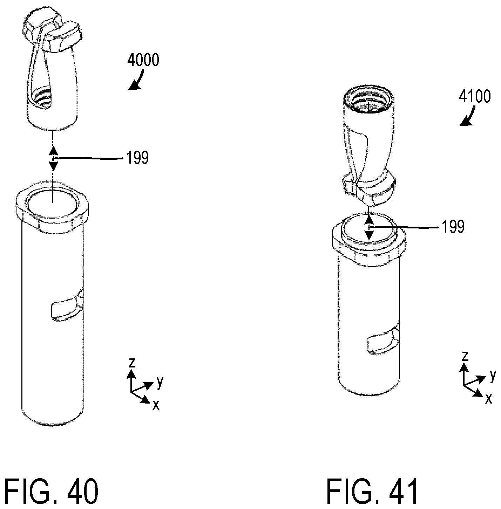

FIGS. 40 and 41 show collet body assemblies 4000 and 4100, where the collet body is threaded and the feet are positioned above and below the collet body crown, respectively.

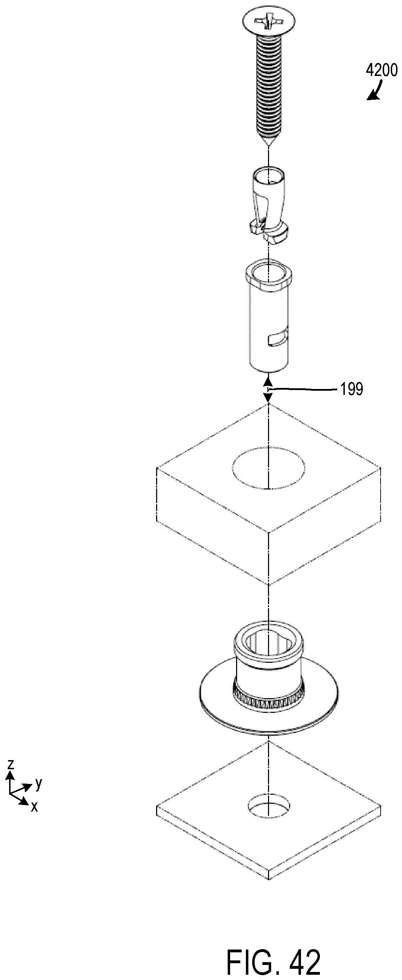

FIGS. 42-44 show an example of a fastener 4200 where the interior of the clamping feet of the collet body are threaded.

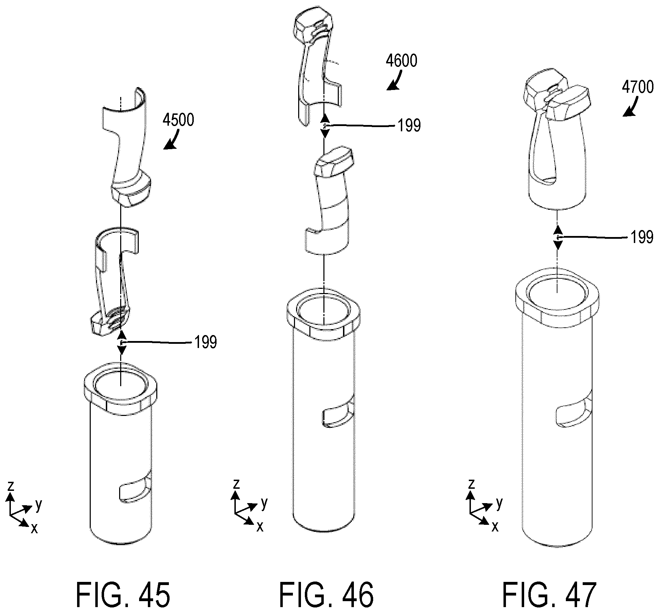

FIGS. 45-46 show collet assemblies 4500 and 4600 with a split leg configuration. FIG. 47 shows a collet assembly 4700 where the crown of the collet body is positioned below the clamping feet.

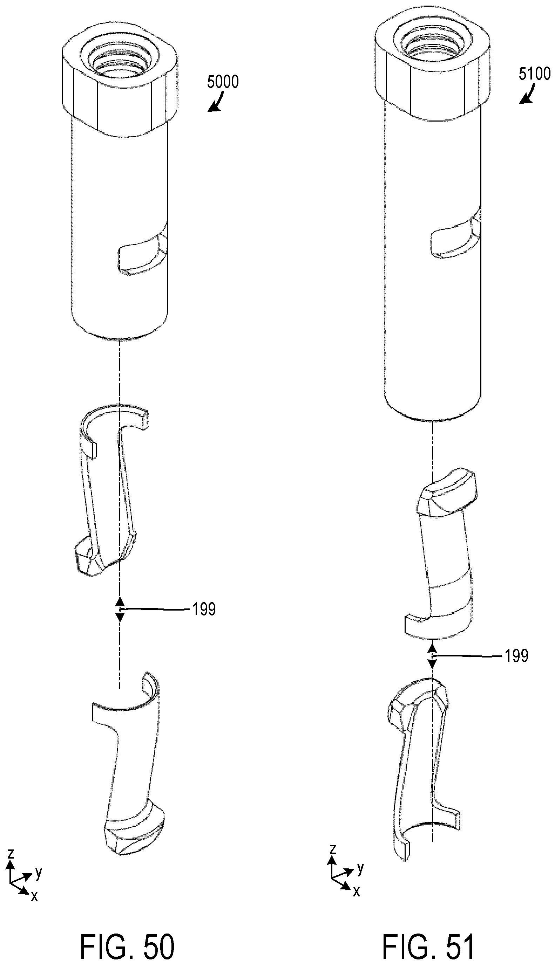

FIGS. 48-49B show a fastener 4800 where the collet body sleeve is threaded in a location which is above the foot openings. FIGS. 50-51 show collet assemblies 5000 and 5100 where the collet body has a split design.

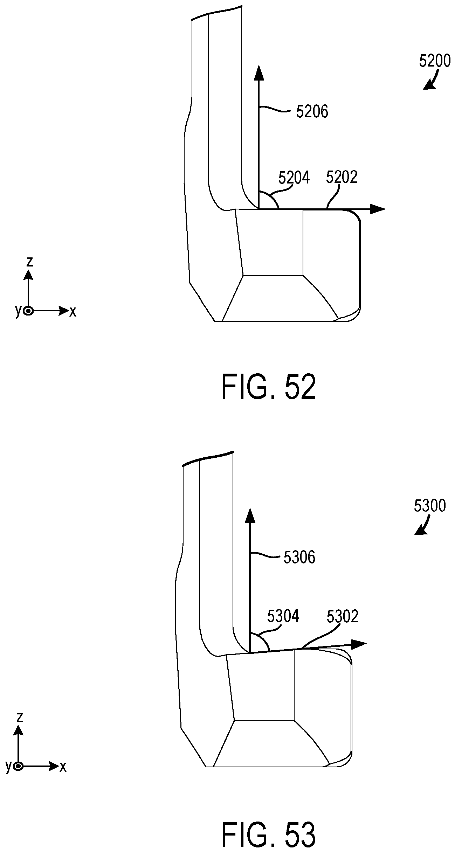

FIG. 52 shows an example of a clamping foot 5200 that may be used in any of the collet bodies described herein or combinations of the collet bodies. The clamping foot 5200 includes an upper surface 5202 that contacts a workpiece during clamping. An angle 5204 formed between the surface 5202 and a longitudinal axis 5206 is further depicted in FIG. 52. The longitudinal axis 5206 is parallel to the central axes of the fasteners depicted herein. The angle 5204 is 90° in the illustrated example. The inventor has recognized that when the fastener is loaded (particularly at a higher level), the surface 5202 deflects such that the outer diameter of the clamping foot rotates away from the clamping surface, thereby decreasing the foot's load carrying capacity.

FIG. 53 shows another example of a clamping foot 5300 that may be used in any of the collet bodies described herein or combinations of the collet bodies. The clamping foot 5300 includes an upper surface 5302 that contacts a workpiece during clamping. An angle 5304 formed between the surface 5302 and a longitudinal axis 5306 is further depicted in FIG. 53. The longitudinal axis 5306 is parallel to the central axes of the fasteners depicted herein. The angle 5304 is less than 90°. Specifically, the angle 5304 may be between 85°-90°, in one example. Specifically, in one use-case example, the angle 5304 may be in the range of 87°-88°. However, angles outside the aforementioned ranges have been contemplated and the angle may be selected based on the material construction of the collet body. The angle 5304 may be selected to allow the clamping plane to become 90° after significant clamping forces have been applied to the foot. The inventor has recognized that the expected fastener loads create material deformation, the base design of the foot is therefore designed based on the expected amount of loading such that the clamping surface of the foot is closer to horizontal during the expected operating clamping force of the fastener.

FIGS. 1-26 and 28-53 are drawn approximately to scale, aside from the schematically depicted components. However, other relative component dimensions may be used, in other embodiments.

FIGS. 1-26 and 28-53 show example configurations with relative positioning of the various components. If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example. An elements inner and outer diameter may be referred to as such. Further an element with a smaller or greater diameter than another element may be referred to as such.

The invention will further be described in the following paragraphs. In one aspect, a fastener assembly is provided that comprises a collet body including: a first cantilever leg extending from a first crown and including a foot that mates with a sleeve opening in a collet body sleeve; and the collet body sleeve at least partially circumferentially enclosing the collet body; a first workpiece sleeve configured to, in an assembled configuration, mate with the collet body sleeve and prevent rotation of the collet body sleeve; and a stud configured to theadingly engage the collet body sleeve or the collet body.

In another aspect, a method for operating a fastener is provided that comprises inserting a workpiece sleeve into an opening of a workpiece; inserting a collet body sleeve assembly into the workpiece sleeve; and clamping the workpiece via rotation of a stud; wherein the fastener includes: a collet body including; a crown with a crown opening; and a cantilever leg extending from the crown and including a foot configured to mate with a sleeve opening in a collet body sleeve; and the collet body sleeve at least partially circumferentially enclosing the collet body; and the workpiece sleeve configured to, in an assembled configuration, mate with the collet body sleeve and prevent rotation of the collet body sleeve; and the stud configured to theadingly engage the collet body sleeve or the collet body. The method further includes, in one example, unclamping the workpiece via rotation of the stud.

In yet another aspect, a fastener is provided that comprises a collet body including; a crown with a crown opening; and a first cantilever leg extending from the crown and including a foot configured to mate with a sleeve opening in a collet body sleeve; the collet body sleeve at least partially circumferentially enclosing the collet body; and a workpiece sleeve configured to: in a first configuration, mate with the collet body sleeve and prevent rotation of the collet body sleeve; and in a second configuration, decouple from the collet body sleeve; and a stud configured to theadingly engage the collet body sleeve.

In any of the aspects or combinations of the aspects, the collet body sleeve may include a crown and the crown includes a planar face.

In any of the aspects or combinations of the aspects, the workpiece sleeve, in a disassembled configuration, may be decoupled from the collet body sleeve.

In any of the aspects or combinations of the aspects, the collet body may further include a second cantilever leg that includes a foot configured to mate with another sleeve opening in the collet body sleeve.

In any of the aspects or combinations of the aspects, the second cantilever leg may extend from the first crown or a second crown that is separate from the first crown.

In any of the aspects or combinations of the aspects, the workpiece sleeve may include a flange with a face profiled to be positioned between two workpieces.

In any of the aspects or combinations of the aspects, the foot may be positioned above the first crown.

In any of the aspects or combinations of the aspects, the foot may be positioned below the first crown.

In any of the aspects or combinations of the aspects, a threaded interface between the collet body sleeve and the stud may be positioned below the sleeve opening.

In any of the aspects or combinations of the aspects, the workpiece sleeve may include a reduced diameter section configured to axially delimit a collet body sleeve crown.

In any of the aspects or combinations of the aspects, the collet body may include a first section with the first cantilever leg; and a second section with a second cantilever leg that extends from a crown and includes a foot configured to mate with a sleeve opening in the collet body sleeve.

In any of the aspects or combinations of the aspects, the foot may be positioned above or below the crown.

In any of the aspects or combinations of the aspects, the collet body sleeve may include a threaded section positioned below the sleeve opening.

In any of the aspects or combinations of the aspects, the workpiece sleeve may include a flange which is profiled to be in face sharing contact with a workpiece.

In any of the aspects or combinations of the aspects, the collet body may not include a threaded section.

In any of the aspects or combinations of the aspects, the stud may include a threaded section that extends to a distal tip of the stud.

In any of the aspects or combinations of the aspects, the distal tip may have a conical shape.

In any of the aspects or combinations of the aspects, the fastener assembly may further comprise a second workpiece sleeve configured to, in an installation configuration, mate with the collet body sleeve and prevent rotation of the collet body sleeve.

In any of the aspects or combinations of the aspects, the foot may be positioned above the first crown; or the foot may be positioned below the first crown.

In any of the aspects or combinations of the aspects, the foot may have an upper surface that forms an angle with a longitudinal axis that is less than 90° when the fastener is in an clamped configuration.

Note that the example control and estimation routines included herein can be used with various fastener configurations. The control methods and routines disclosed herein may be stored as executable instructions in non-transitory memory and may be carried out by a tooling apparatus. However, it will be appreciated that at least a portion of the method steps may be manually implemented via installation personnel.

The specific routines described herein may represent one or more of any number of processing strategies such as event-driven, interrupt-driven, multi-tasking, multi-threading, and the like. As such, various actions, operations, and/or functions illustrated may be performed in the sequence illustrated, in parallel, or in some cases omitted. Likewise, the order of processing is not necessarily required to achieve the features and advantages of the example embodiments described herein, but is provided for ease of illustration and description. One or more of the illustrated actions, operations and/or functions may be repeatedly performed depending on the particular strategy being used. Further, the described actions, operations and/or functions may graphically represent code to be programmed into non-transitory memory of the computer readable storage medium in the fastener and/or tooling apparatus, where the described actions are carried out by executing the instructions in a tooling apparatus and a fastener which includes various components.

It will be appreciated that the configurations and routines disclosed herein are exemplary in nature, and that these specific embodiments are not to be considered in a limiting sense, because numerous variations are possible. For example, the above technology can be applied to a broad range of manufacturing fields such as the aerospace industry, the construction industry, the maritime industry, etc. The subject matter of the present disclosure includes all novel and non-obvious combinations and sub-combinations of the various systems and configurations, and other features, functions, and/or properties disclosed herein.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

Further Examples are described as follows:
Example 1. A fastener assembly, comprising:
   a collet body including:
   a first cantilever leg extending from a first crown and including a foot that mates with a sleeve opening in a collet body sleeve;
   wherein the collet body sleeve at least partially circumferentially enclosing the collet body;
   a first workpiece sleeve configured to, in an assembled configuration, mate with the collet body sleeve and prevent rotation of the collet body sleeve; and
   a stud configured to theadingly engage the collet body sleeve or the collet body.
Example 2. The fastener assembly of Example 1, wherein the first workpiece sleeve, in a disassembled configuration, is decoupled from the collet body sleeve.
Example 3. The fastener assembly of Example 1, wherein the collet body further includes a second cantilever leg that includes a foot which is configured to mate with another sleeve opening in the collet body sleeve.
Example 4. The fastener assembly of Example 3, wherein the second cantilever leg extends from the first crown or a second crown that is separate from the first crown.
Example 5. The fastener assembly of Example 1, wherein the first workpiece sleeve includes a flange with a face that is profiled to be positioned between two workpieces.
Example 6. The fastener assembly of Example 1, wherein:
   the foot is positioned above the first crown; or
   the foot is positioned below the first crown.
Example 7. The fastener assembly of Example 1, wherein the foot has an upper surface that forms an angle with a longitudinal axis that is less than 90° when the fastener is in an clamped configuration.
Example 8. The fastener assembly of Example 1, wherein a threaded interface between the collet body sleeve and the stud is positioned below the sleeve opening.
Example 9. The fastener assembly of Example 1, wherein the first workpiece sleeve includes a reduced diameter section configured to axially delimit a collet body sleeve crown.
Example 10. The fastener assembly of Example 1, wherein the collet body includes:
   a first section with the first cantilever leg; and
   a second section with a second cantilever leg that extends from a crown and includes a foot configured to mate with a sleeve opening in the collet body sleeve.
Example 11. The fastener assembly of Example 1, further comprising a second workpiece sleeve configured to, in an installation configuration, mate with the collet body sleeve and prevent rotation of the collet body sleeve.
Example 12. A method for operating a fastener, comprising:
   inserting a workpiece sleeve into an opening of a workpiece;
   inserting a collet body sleeve assembly into the workpiece sleeve; and
   clamping the workpiece via rotation of a stud;
   wherein the fastener includes:
      a collet body including;

   a crown with a crown opening; and
      a cantilever leg extending from the crown and including a foot configured to mate with a sleeve opening in a collet body sleeve;
      wherein the collet body sleeve at least partially circumferentially enclosing the collet body; and
      the workpiece sleeve configured to, in an assembled configuration, mate with the collet body sleeve and prevent rotation of the collet body sleeve; and
   the stud configured to theadingly engage the collet body sleeve or the collet body.
Example 13. The method of Example 12, further comprising unclamping the workpiece via rotation of the stud.
Example 14. A fastener, comprising:
   a collet body including:
   a crown with a crown opening; and
      a first cantilever leg extending from the crown and including a foot configured to mate with a sleeve opening in a collet body sleeve;
      the collet body sleeve at least partially circumferentially enclosing the collet body; and
      a workpiece sleeve configured to:
   in a first configuration, mate with the collet body sleeve and prevent rotation of the collet body sleeve; and
   in a second configuration, decouple from the collet body sleeve; and
   a stud configured to theadingly engage the collet body sleeve.
Example 15. The fastener of Example 14, wherein the foot is positioned above or below the crown.
Example 16. The fastener of Example 14, wherein the collet body sleeve includes a threaded section positioned below the sleeve opening.
Example 17. The fastener of Example 14, wherein the workpiece sleeve includes a flange which is profiled to be in face sharing contact with a workpiece.
Example 18. The fastener of Example 14, wherein the collet body does not include a threaded section.
Example 19. The fastener of Example 14, wherein the stud includes a threaded section that extends to a distal tip of the stud.
Example 20. The fastener of Example 14, wherein the foot has an upper surface that forms an angle with a longitudinal axis that is less than 90° when the fastener is in an clamped configuration.

## Claims

1. A fastener assembly (100), comprising:
a collet body (104) including:
a first cantilever leg (128) extending from a first crown (126) and including a foot (130) that mates with a sleeve opening (145) in a collet body sleeve (106);
wherein the collet body sleeve (106) at least partially circumferentially enclosing the collet body (104);
a first workpiece sleeve (108) configured to, in an assembled configuration, mate with the collet body sleeve (106) and prevent rotation of the collet body sleeve (106); and
a stud (102) configured to theadingly engage the collet body sleeve (106) or the collet body (104).

2. The fastener assembly (100) of claim 1, wherein the first workpiece sleeve (108), in a disassembled configuration, is decoupled from the collet body sleeve (106).

3. The fastener assembly (100) of claim 1, wherein the collet body (104) further includes a second cantilever leg (128) that includes a foot (130) which is configured to mate with another sleeve opening (145) in the collet body sleeve (106).

4. The fastener assembly (100) of claim 3, wherein the second cantilever leg (128) extends from the first crown (126) or a second crown (2112 or 2210) that is separate from the first crown (126).

5. The fastener assembly (100) of claim 1, wherein the first workpiece sleeve (108) includes a flange with a face that is profiled to be positioned between two workpieces (110 and 112).

6. The fastener assembly (100) of claim 1, wherein the foot (130) is positioned above the first crown (126).

7. The fastener assembly (100) of claim 1, wherein the foot (130) is positioned below the first crown (126).

8. The fastener assembly (100) of claim 1, wherein a threaded interface (1500) between the collet body sleeve (106) and the stud is positioned below the sleeve opening (145).

9. The fastener assembly (100) of claim 1, wherein the first workpiece sleeve (108) includes a reduced diameter section (600) configured to axially delimit a collet body sleeve crown (126).

10. The fastener assembly (100) of claim 1, wherein the collet body (104) includes:
a first section with the first cantilever leg (128); and
a second section with a second cantilever leg (128) that extends from a crown (2112 or 2210) and includes a foot (2110 or 2208) configured to mate with a sleeve opening (2114 or 2212) in the collet body sleeve (2101 or 2201)).

11. The fastener assembly (100) of claim 1, further comprising a second workpiece sleeve (2300 or 2400) configured to, in an installation configuration, mate with the collet body sleeve (106) and prevent rotation of the collet body sleeve (106).

12. The fastener assembly (100) of claim 1, wherein:
the collet body sleeve (106) includes a threaded section (300) positioned below the sleeve opening (145); and/or
the first workpiece sleeve (108) includes a flange (141) which is profiled to be in face sharing contact with a workpiece (110).

13. The fastener assembly (100) of claim 1, wherein:
the collet body (104) does not include a threaded section; and/or
the stud (102) includes a threaded section (122) that extends to a distal tip (124) of the stud.

14. A method (2700) for operating a fastener, comprising:
inserting a workpiece sleeve into an opening of a workpiece;
inserting a collet body sleeve assembly into the workpiece sleeve (2703); and
clamping the workpiece via rotation of a stud (2704);
wherein the fastener includes:
a collet body including;
a crown with a crown opening; and
a cantilever leg extending from the crown and including a foot configured to mate with a sleeve opening in a collet body sleeve;
wherein the collet body sleeve at least partially circumferentially enclosing the collet body; and
the workpiece sleeve configured to, in an assembled configuration, mate with the collet body sleeve and prevent rotation of the collet body sleeve; and
the stud configured to theadingly engage the collet body sleeve or the collet body.

15. The method of claim 14, further comprising unclamping the workpiece via rotation of the stud.
